# EUROPÄISCHE PATENTSCHRIFT

(11) **EP 1 484 221 B1**
(45) Veröffentlichungstag und Bekanntmachung des Hinweises auf die Patenterteilung: **22.03.2006**
(21) Anmeldenummer: 04011621.2
(22) Anmeldetag: 15.05.2004
(51) Int. Cl.: B60R 21/06, B60R 5/04

(54) **Halterung für eine Funktionseinrichtung in einem Fahrzeuginnenraum**
Fastening device for a functional apparatus in a vehicle interior
Dispositif de maintien d'un appareil fonctionnel dans un intérieur véhicule

(30) Priorität: 02.06.2003 DE 10326024
(43) Veröffentlichungstag der Anmeldung: 08.12.2004
(73) Patentinhaber: BOS GmbH & Co. KG, 73760 Ostfildern (DE)
(72) Erfinder: Ehrenberger, Marina, 73730 Esslingen (DE)
(74) Vertreter: Patentanwälte Ruff, Wilhelm, Beier, Dauster & Partner

(56) Entgegenhaltungen:
- EP-A- 0 754 594
- DE-A- 3 922 450
- DE-C- 10 033 381
- DE-C- 10 063 725

## Beschreibung

Die Erfindung betrifft eine Halterung für eine Funktionseinrichtung in einem Fahrzeuginnenraum, mit fahrzeuginnenraumseitig vorgesehenen Befestigungsmitteln, sowie mit der Funktionseinrichtung zugeordneten Haltemitteln, die mit den fahrzeuginnenraumseitig vorgesehenen Befestigungsmitteln lösbar in Wirkverbindung bringbar sind.

Eine derartige Halterung ist für eine Funktionseinrichtung in Form eines Kassettengehäuses, das mit einem vertikal aufspannbaren Trennnetz sowie mit einer horizontal ausziehbaren Laderaumsbdeckung versehen ist, allgemein bekannt. Zur Befestigung eines derartigen Kassettengehäuses in einem Laderaum des Kraftfahrzeugs sind im Bereich gegenüberliegender Seitenwandungen als Befestigungsmittel Befestigungsaufnahmen vorgesehen, in die das Kassettengehäuse mittels entsprechen- der Haltemittel einrastbar ist, siehe z.B. EP754594 A2 und DE 10033381 C1. Um das in dem Kassettengehäuse positionierte Trennnetz auch in einer nach vorne umgeklappten Position von Rückenlehne und Fondsitzbank in dem dann erweiterten Laderaum aufspannen zu können, sind an den Rückseiten der Rückenlehnen Schienen- oder Nutelemente vorgesehen, in die das Kassettengehäuse quer zur Fahrzeuglängsrichtung mittels korrespondierend gestalteter Profilabschnitte einschiebbar ist. Dadurch ist das Kassettengehäuse an den Rückenlehnen in deren umgeklappter Position fixierbar. Da die Rückenlehnen in der umgeklappten Position einen Laderaumboden in normaler Fahrtrichtung nach vorne verlängern, kann das entsprechende Trennnetz des Kassettengehäuses vom Laderaumboden ausgehend bis zu einem Dachhimmel hin aufgespannt werden. Für die Befestigung des Kassettengehäuses an den Seitenwandungen einerseits und an den Rückenlehnen der Fondsitzbank andererseits sind unterschiedliche und separate Befestigungssysteme notwendig.

Aufgabe der Erfindung ist es, eine Halterung der eingangs genannten Art zu schaffen, die mit einfachen Mitteln eine Fixierung der Funktionseinrichtung in unterschiedlichen Positionen innerhalb des Fahrzeuginnenraumes ermöglicht.

Diese Aufgabe wird dadurch gelöst, dass die Haltemittel in ihrer Positionierung und in ihrer Gestaltung derart ausgeführt sind, dass die Haltemittel alternativ zu der Verbindung mit den Befestigungsmitteln an Sicherungsmitteln festlegbar sind, die an wenigstens einer beweglichen Sitzlehne zur fahrzeugseitigen lösbaren Fixierung der Sitzlehne in einer aufrechten Lehnposition vorgesehen sind. Durch die erfindungsgemäße Lösung sind die fahrzeugseitigen Befestigungsmittel und die sitzlehnenseitigen Sicherungsmittel derart aufeinander abgestimmt, dass die Haltemittel der Funktionseinrichtung alternativ mit den sitzlehnenseitigen Sicherungsmitteln oder den fahrzeugseitigen Befestigungsmitteln in Verbindung bringbar sind. Wahlweise kann die Funktionseinrichtung somit an der beweglichen Sitzlehne oder an den fahrzeugfesten Befestigungsmitteln fixiert werden. Als Funktionseinrichtungen sind insbesondere Schutzvorrichtungen in Form von Laderaumabdeckungen und/oder -abtrennungen oder auch Sonnenschutzvorrichtungen für Scheibenbereiche des Kraftfahrzeugs vorgesehen. Es ist auch möglich, als Funktionseinrichtungen verschiedene Arten von Gehäusen, Aufnahmemodulen oder ähnliches vorzusehen. Die erfindungsgemäße Lösung ermöglicht die Fixierung der Funktionseinrichtung entweder an den Befestigungsmitteln oder an den sitzlehnenseitigen Sicherungsmitteln. Die Haltemittel ermöglichen somit eine Doppelfunktion, indem sie zum einen mit den Befestigungsmitteln und zum anderen mit den Sicherungsmitteln verbindbar sind.

In Ausgestaltung der Erfindung sind die Befestigungsmittel im Bereich von Seitenwandungen des Fahrzeuginnenraums angeordnet, und die Befestigungsmittel und Sicherungsmittel weisen jeweils einen formschlüssig wirksamen Sperrmechanismus auf, um die Haltemittel aufnehmen zu können. Diese Ausgestaltung geht davon aus, dass die Sicherungsmittel zur fahrzeugseitigen Festlegung der wenigstens einen Sitzlehne in ihrer aufrechten Position fahrzeugseitig bereits vorhanden sind. Eine Anpassung der Befestigungsmittel an die Sicherungsmittel erfordert somit lediglich eine konstruktive Umgestaltung der Befestigungsmittel im Bereich der Seitenwandungen des Fahrzeuginnenraumes, ohne dass die gesamte Sitzlehnenanbindung modifiziert werden muss. Als formschlüssig wirksamer Sperrmechanismus ist insbesondere eine Verriegelungseinrichtung vorgesehen, die manuell durch entsprechende Betätigungsglieder entriegelt werden kann.

In weiterer Ausgestaltung der Erfindung sind die Haltemittel zwischen zwei unterschiedlichen Fixierpositionen beweglich gelagert, wobei die beiden Fixierpositionen auf die Lage der Funktionseinrichtung relativ zu den Sicherungsmitteln einerseits und relativ zu den Befestigungsmitteln andererseits abgestimmt sind. Dadurch ist es möglich, Positionsunterschiede in der Relativlage der Sicherungsmittel oder der Befestigungsmittel zu den Haltemitteln auszugleichen. Vorzugsweise sind die Haltemittel schwenkbeweglich gelagert. Es ist auch möglich, die Haltemittel linearbeweglich anzuordnen, um einen entsprechenden Längenausgleich zu erzielen. In jeder Fixierposition sind die Haltemittel arretiert, um eine sichere Verankerung der Funktionseinrichtung an der Sitzlehne oder an einer entsprechenden Begrenzungsfläche des Fahrzeuginnenraumes zu ermöglichen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Funktionseinrichtung für einen Laderaum eines Kraftfahrzeugs, die mit einer erfindungsgemäßen Halterung versehen ist,
- Fig. 2: die Funktionseinrichtung nach Fig. 1 in einer auf umgeklappten Sitzlehnen befestigten Fixierposition,
- Fig. 3: den Laderaum nach den Fig. 1 und 2 ohne die Funktionseinrichtung nach den Fig. 1 und 2,
- Fig. 4: in schematischer Darstellung einen Ausschnitt der Halterung für die Funktionseinrichtung an einer Sitzlehne,
- Fig. 5: in schematischer Darstellung einen Ausschnitt ähnlich Fig. 4, bei dem die Funktionseinrichtung mittels der Halterung im Bereich einer fahrzeugseitigen Seitenwandung befestigt ist,
- Fig. 6: schematisch eine weitere Ausführungsform einer Halterung der Funktionseinrichtung einer Sitzlehne ähnlich Fig. 4,
- Fig. 7: die Ausführungsform nach Fig. 6 in ihrer im Bereich einer fahrzeugseitigen Seitenwandung befestigten Halteposition,
- Fig. 8: einen Ausschnitt einer Halterung für eine weitere Funktionseinrichtung im Bereich einer Sitzlehne ähnlich Fig. 6,
- Fig. 9: die Ausführungsform nach Fig. 8 in ihrer im Bereich einer fahrzeugseitigen Seitenwandung positionierten Halteposition,
- Fig. 10: schematisch in perspektivischer Darstellung eine fahrzeugseitige Sitzlehnenbefestigung und
- Fig. 11: in vergrößerter, schematischer Schnittdarstellung die Sitzlehnenbefestigung nach Fig. 10.

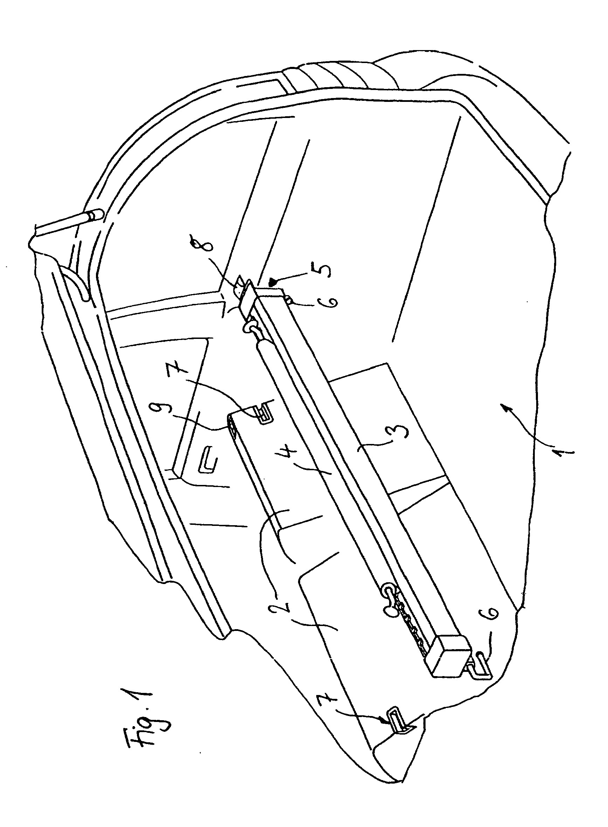

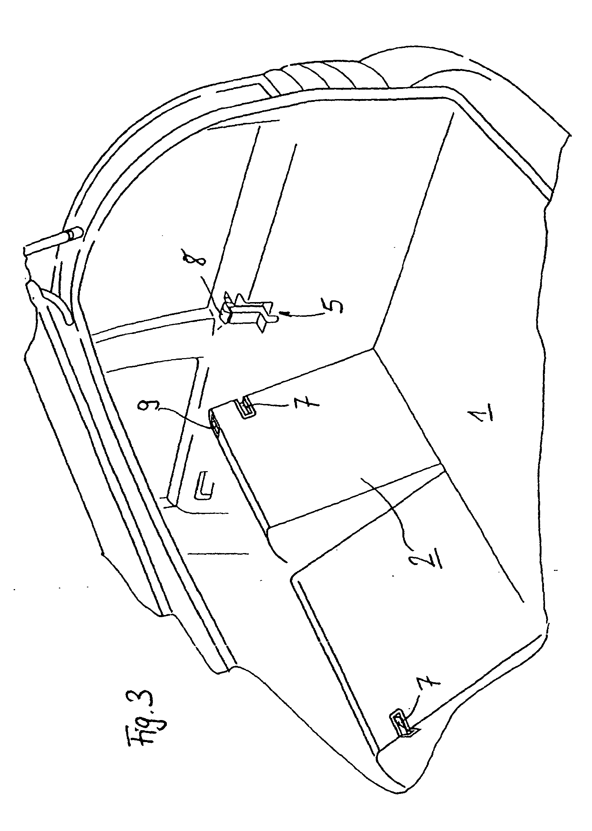

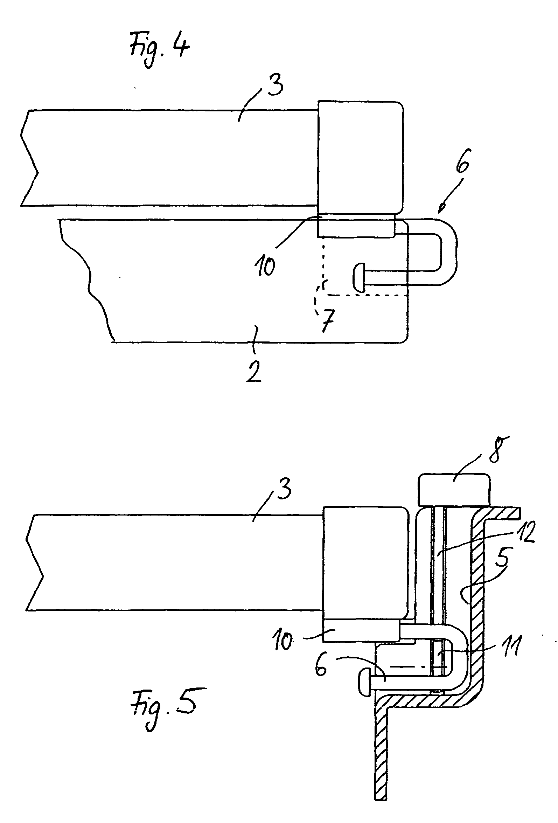

Bei dem Ausführungsbeispiel nach den Fig. 1 bis 5 ist eine Halterung für ein mit einem vertikal aufspannbaren Trennnetz 4 versehenes Kassettengehäuse 3 offenbart, das als Funktionseinrichtung im Sinne der Erfindung dient. Anstelle des Kassettengehäuses können auch andere Funktionseinrichtungen in einem Laderaum, in einem von dem Fahrgastraum getrennten Kofferraum oder in einem anderen Bereich eines Fahrzeuginnenraumes eingesetzt werden. Wesentlich ist es, dass die Funktionseinrichtung ein formstabiles Gehäuse, einen formstabilen Rahmen, ein formstabiles Gestell oder ähnliches aufweist, um eine sichere Verankerung im entsprechenden Fahrzeuginnenraum zu ermöglichen. Jede Funktionseinrichtung ist lösbar im Fahrzeuginnenraum gehalten, um eine einfache Montage, Demontage oder eine Umpositionierung innerhalb des Fahrzeuginnenraumes zu ermöglichen.

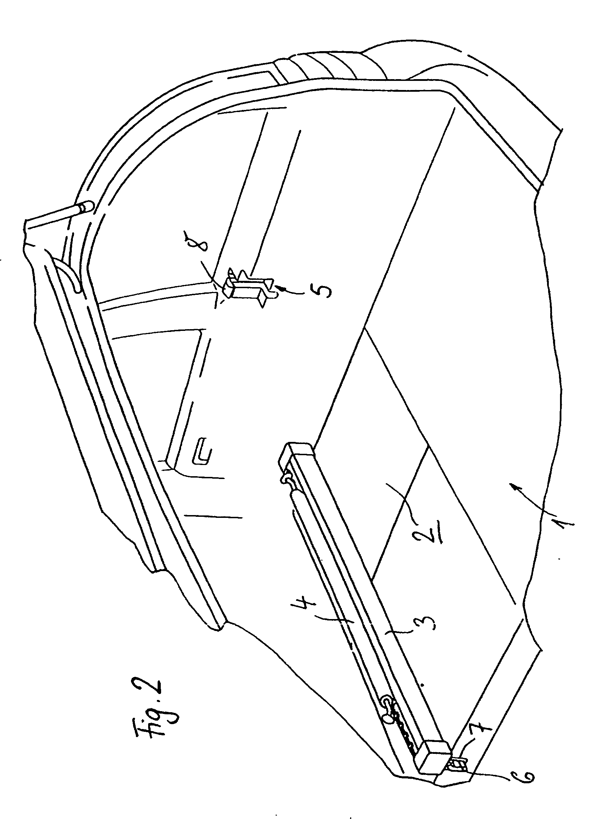

Der Laderaum 1 innerhalb des Kombipersonenkraftwagens ist in normaler Fahrtrichtung nach vorne durch zwei aufrechtstehende Sitzlehnen 2 einer Fondsitzbank begrenzt. Die Sitztehnen 2 bilden in ihrer aufrechtstehenden Funktionsposition (Lehnposition) eine sich über die gesamte Breite des Fahrzeuginnenraumes erstreckende Sitzlehnenanordnung. Beide Sitzlehnen 2 sind unabhängig voneinander um eine in Fahrzeugquerrichtung verlaufende Kippachse schwenkbeweglich gelagert, so dass sie aus der aufrechten Funktionsposition in eine nach vorne umgeklappte, liegende Funktionsposition überführbar sind (Fig. 2). In der liegenden Funktionsposition sind die Sitzlehnen 2 vorzugsweise arretiert. Eine entsprechende Arretierung, die vorzugsweise manuell lösbar ist, ist in nicht näher dargestellter Weise im Bereich der Schwenkachse der Sitzlehnen 2 positioniert.

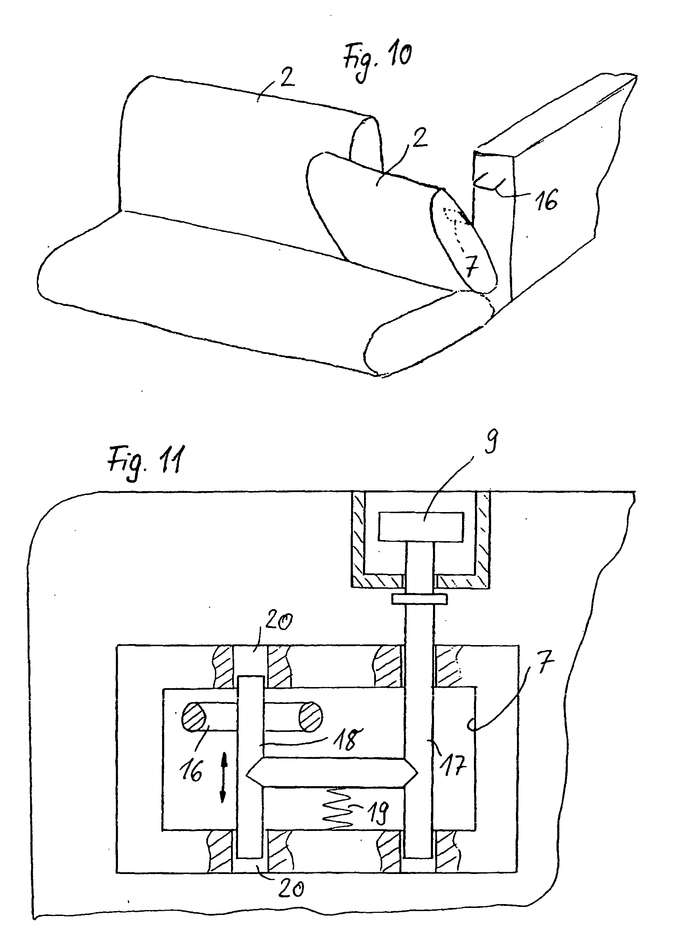

In der aufrechten Funktionsposition sind die Sitzlehnen 2 durch Sicherungsmittel 7, 16 (Fig. 10 und 11) fahrzeugfest gehalten. Die Sicherungsmittel 7, 16 werden jeweils durch einen manuell lösbaren Sperrmechanismus gebildet. Jeder Sitzlehne 2 ist rückseitig in einem außenliegenden Bereich ein Verriegelungsmechanismus zugeordnet, der durch ein karosserieseitig im Bereich einer Seitenwandung des Fahrzeuginnenraumes verankertes Bügelelement 16 einerseits und eine Riegeleinheit 17 bis 20 andererseits gebildet ist. Die Riegeleinheit 17 bis 20 ist in einer Aufnahmetasche 7 im Bereich einer Rückseite der jeweiligen Sitzlehne 2 angeordnet. Das entsprechende Bügelelement 16 ist in Fahrtrichtung nach vorne ausgerichtet und taucht zwangsläufig in die Aufnahmetasche 7 ein, sobald die Sitzlehne 2 in ihre aufrechte Funktionsposition überführt ist. Die Riegeleinheit 17 bis 20 weist einen linear beweglich verschiebbaren Riegelstift 18 auf, der durch einen Federspeicher 19 in Verriegelungsrichtung beaufschlagt ist. Die Riegeleinheit ist zudem mit einer Betätigungsstange 17 versehen, die an ihrem außenliegenden Stirnende einen Betätigungsknopf 9 aufweist. Der Betätigungsknopf 9 ist manuell bedienbar und als Druckknopf ausgeführt. Durch ein Drücken des Betätigungsknopfes 9 wird die Riegeleinheit in Richtung des Doppelpfeiles entgegen der Druckkraft des Federspeichers 19 nach unten gedrückt (Fig. 11), wodurch der Riegelstift 18 das Bügelelement 16 freigibt. Die Riegeleinheit ist darüber hinaus derart mit einer Anlaufschräge versehen, dass bei einem Verschwenken der Sitzlehne 2 in die aufrechte Funktionsposition die Riegeleinheit durch das Auftreffen der Bügelelemente 16 auf den Riegelstift 18 in die Freigabeposition überführt wird und nach dem Eintauchen des Bügelelementes 16 in die Aufnahmetasche 7 automatisch in die das Bügelelement 16 formschlüssig rückhaltende Verriegelungsposition zurückgeführt wird. Eine erneute Entriegelung wird in einfacher Weise durch ein Drücken des Betätigungsknopfes 9 erzielt.

Wie anhand der Fig. 1 erkennbar ist, ist die Funktionseinrichtung 3 mit ihrem Kassettengehäuse in Befestigungsmitteln 5 im Bereich der gegenüberliegenden Seitenwandungen des Laderaumes 1 in einer quer zur Fahrtrichtung und etwa horizontal ausgerichteten Funktionsposition arretierbar. Hierzu sind an einer Unterseite des Kassettengehäuses im Bereich gegenüberliegender Stirnenden der längserstreckten Funktionseinrichtung, vorliegend des längserstreckten Kassettengehäuses, jeweils Haltemittel 6 vorgesehen, die in den Befestigungsmitteln 5 lösbar formschlüssig verankerbar sind. Bei der Ausführungsform nach den Fig. 1 bis 5 sind die Haltemittel als starr im Bereich der Unterseite des Kassettengehäuses angeordnete und sowohl nach unten als auch seitlich nach außen ragende Hakenteile 6 ausgeführt. Die Hakenteile 6 sind einstückig aus Metall, vorzugsweise aus Stahl, hergestellt und weisen eine U-Form auf. Dabei ist ein oberer U-Schenkel positionsfest in einer Aufnahme 10 an einem Seitenteil des Kassettengehäuses gehalten. Die Aufnahme 10 ist vorzugsweise einstückiger Teil des Seitenteiles des Kassettengehäuses 3. Ein unterer U-Schenkel jedes Hakenteiles 6 ragt parallel zu einer Mittellängsachse des Kassettengehäuses zu einer Mitte des Kassettengehäuses 3 hin ab und ist an seinem freien Stirnende mit einem Abschlusskopf versehen, dessen Durchmesser größer ist als der Durchmesser des U-Schenkels des Hakenteiles 6. Der Abschlusskopf des U-Schenkels ist vorzugsweise, zumindest teilweise, aus einem elastischen Werkstoff gestaltet und dient neben einer Anschlagfunktion als Puffer- oder Dämpferelement. Jedes Hakenteil ragt jeweils seitlich nach außen über eine Stirnfläche des Kassettengehäuses nach außen ab. In den Seitenwandungen des Laderaumes sind schlitzartige Aufnahmetaschen vorgesehen, die Teil der Befestigungsmittel 5 sind. Die Befestigungsmittel 5 weisen zudem im Bereich jeder Seitenwandung eine Auflageschulter für die entsprechende Stirnseite des Kassettengehäuses 3 auf. In die schlitzartige Aufnahmetasche der Befestigungsmittel 5 taucht der jeweilige Hakenteil 6 des Kassettengehäuses ein. Der Aufnahmetasche ist eine Verriegelungseinrichtung 8, 11, 12 zugeordnet, die ebenfalls Teil der Befestigungsmittel 5 ist. Die Verriegelungseinrichtung weist eine Rastklinke 11 auf, die im eingesetzten Zustand das jeweilige Hakenteil des Hecks formschlüssig in der Aufnahmetasche sichert. Die Rastklinke ist durch ein als Betätigungselement dienendes Kraftübertragungselement 12 zwischen einer das Hakenteil 6 freigebenden und einer das Hakenteil formschlüssig in der Aufnahmetasche sichernden Position beweglich. An einem oberen Stirnende des Kraftübertragungselementes 12 ist ein manuell bedienbares Betätigungselement 8 vorgesehen. Vorzugsweise sind die Befestigungsmittel 5 auf der nicht dargestellten, gegenüberliegenden Seite in gleicher Weise ausgeführt wie anhand der Fig. 1 bis 5 dargestellt.

Die Hakenteile 6 sind so ausgeführt, dass das Kassettengehäuse alternativ auch in den Aufnahmetaschen der Sicherungsmittel 7 der Sitzlehnen 2 verankerbar ist. Dabei tauchen die freien Bügelschenkel in die Aufnahmetaschen ein, bis der entsprechende Riegelstift 18 in jeder Aufnahmetasche 7 den entsprechenden U-Schenkel formschlüssig hintergreift. Die Anschlagköpfe verhindern, dass sich das Kassettengehäuse in der an den Sitzlehnen 2 verankerten Funktionsposition in seiner Längserstreckung, d.h. quer zur Fahrtrichtung, verschieben kann. Die Anschlagköpfe dienen somit als Axialanschlag, der mit dem jeweiligen Riegelstift 18 zusammenwirkt, um eine axiale Begrenzung der Verschiebbarkeit des Kassettengehäuses 3 in den seitlich nach außen offenen Aufnahmetaschen 7 der Sitztehnen 2 zu erzielen.

Die Haltemittel der Funktionseinrichtung 3 sind somit derart ausgeführt, dass die Funktionseinrichtung 3 einerseits in den Befestigungsmitteln 5 der Seitenwandungen des Laderaumes 1 oder andererseits an den Sicherungsmitteln für die Sitzlehnen 2 in der nach vorne umgeklappten Position verankerbar sind.

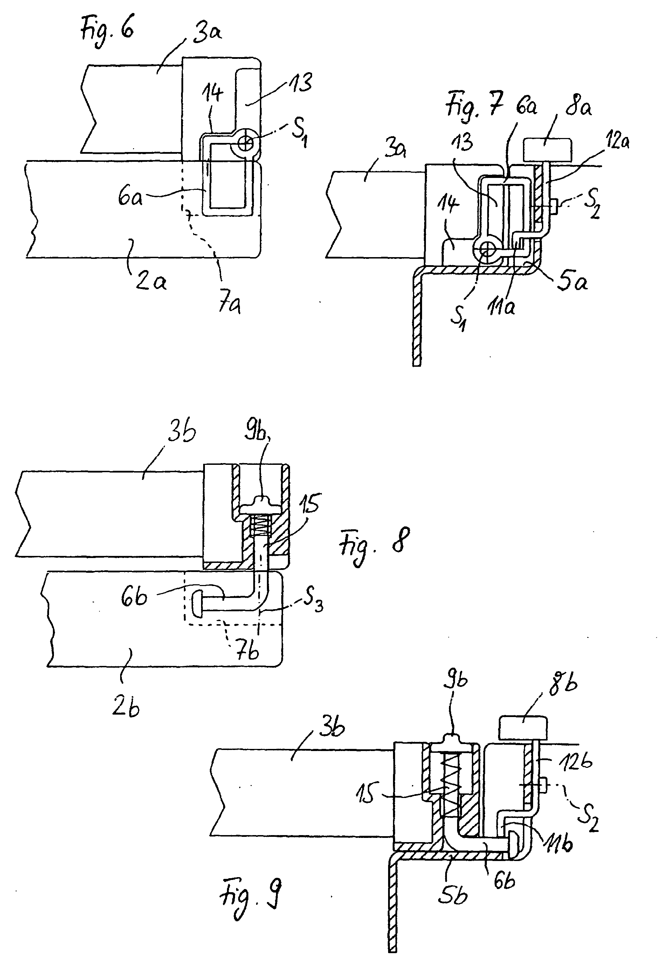

Bei der Ausführungsform nach den Fig. 6 und 7 ist ebenfalls eine Funktionseinrichtung 3a, vorzugsweise ein Kassettengehäuse gemäß den Fig. 1 bis 5, zum einen fahrzeugseitig in entsprechenden Seitenwandungen und zum anderen sitzlehnenseitig in entsprechenden Aufnahmetaschen 7a der Sitzlehnen 2a verankerbar. Funktionsgleiche Teile sind mit den gleichen Bezugszeichen unter Hinzufügung des Buchstabens a versehen. Wesentlicher Unterschied ist es, dass die Haltemittel der Funktionseinrichtung 3a im Bereich jeder Stirnseite des Kassettengehäuses jeweils ein Bügelelement 6a aufweisen, das um eine Schwenkachse S₁ an einem entsprechenden Seitenteil des Kassettengehäuses schwenkbeweglich gelagert ist. Die Schwenkachse S₁ ist quer zu einer Mittellängsachse des Kassettengehäuses ausgerichtet und erstreckt sich in einer in den Seitenwandungen fixierten Funktionsposition des Kassettengehäuses in Fahrzeuglängsrichtung (Fig. 7). An dem Seitenteil des Kassettengehäuses sind Aufnahmebereiche 13, 14 vorgesehen, die Endanschläge für die beiden unterschiedlichen Fixierpositionen des Bügelelementes 6a bewirken. In einer unteren Fixierposition des Bügelelementes 6a ist das Bügelelement 6a so ausgerichtet, dass es von einer Unterseite des Kassettengehäuses aus nach unten abragt. In der oberen Fixierposition ragt das Bügelelement 6a stirnseitig des Kassettengehäuses seitlich nach außen ab (Fig. 7). In beiden Fixierpositionen ist das Bügelelement 6a in nicht näher dargestellter Weise arretiert. Eine entsprechende Arretiereinrichtung kann vorzugsweise im Bereich der Schwenkachse S₁ vorgesehen sein. In der unteren Fixierposition, in der jedes Bügelelement 6a von der Unterseite des Kassettengehäuses aus nach unten abragt, ist jedes Bügelelement 6a in einer Aufnahmetasche 7a der jeweiligen Sitzlehne 2a aufnehmbar und mittels einer Riegeleinrichtung gemäß Fig. 11 dort verankerbar.

Bei allen Ausführungsformen ist es alternativ möglich, die Sitzlehnenanordnung über die gesamte Fahrzeugbreite einteilig durchgängig zu gestalten. Dennoch sind an beiden Außenseiten der Sitzlehnenanordnung analog den beschriebenen Ausführungsbeispielen entsprechende Sicherungsmittel vorgesehen, die vorzugsweise mit Aufnahmetaschen an den Rückseiten der Rückenlehnen versehen sind.

In der seitlich nach außen abragenden Fixierposition dieses Bügelelementes 6a ist jedes Bügelelement 6a ähnlich der Ausführungsform nach den Fig. 1 bis 5 in eine schlitzartige Aufnahmetasche 5a der fahrzeugseitigen Befestigungsmittel an den Seitenwandungen eingetaucht. Eine Verriegelungseinrichtung 8a, 11a, 12a, die um eine in Fahrzeugquerrichtung verlaufende Schwenkachse S₂ schwenkbeweglich gelagert ist, dient dazu, jedes Bügelelement 6a in der jeweiligen Aufnahmetasche 5a formschlüssig zu verankern. Mittels des Betätigungselementes 8a ist die Verriegelungseinrichtung manuell lösbar. Vorzugsweise erfolgt eine Verriegelung zwangsläufig bei Einsetzen des Kassettengehäuses bzw. des entsprechenden Bügelelementes 6a, indem durch Federkraft die entsprechende Rastklinke 11a oder ein anders gestaltetes Riegelelement das Bügelelement 6a hintergreifen, sobald dieses seine Endposition in der Aufnahmetasche 5a erreicht hat.

Beim Ausführungsbeispiel nach den Fig. 8 und 9 ist anstelle eines um eine in Fahrtrichtung ausgerichtete Schwenkachse S₁ beweglichen Bügelelementes ein Hakenteil 6b Teil der Haltemittel, wobei das Hakenteil 6b gemeinsam mit einem Betätigungsabschnitt 15 einstückig und L-förmig gestaltet ist. Das Hakenteil 6b ist zum einen längs des Betätigungsabschnittes 15 und damit längs einer Drehachse S₃ verschiebbar angeordnet. Zum anderen ist das Hakenteil 6b um diese Drehachse S₃ verdrehbar gelagert. Die Drehachse S₃ erstreckt sich in einer Funktionsposition des Kassettengehäuses 3b, in der das Kassettengehäuse 3b fahrzeugseitig in den Seitenwandungen positioniert ist, in Fahrzeughochrichtung. Das Hakenteil 6b ist durch eine nicht näher bezeichnete Druckfeder in Hochrichtung druckbelastet. Zudem ist in dem Seitenteil des Kassettengehäuses an einer Unterseite eine Schlitzführung vorgesehen, die das Hakenteil 6b in einer gegenüber der Position nach Fig. 8 um 180° nach außen verdrehten Position fixiert. Da gleichzeitig die Druckfeder das Betätigungsteil 15 und damit auch das Hakenteil 6b nach oben drückt, wird eine formschlüssige Sicherung des Hakenteiles 6b in dieser Schlitzführung erzielt. Die Höhe der Schlitzführung ist so gewählt, dass das Hakenteil 6b bündig in diese Schlitzführung eintauchen kann. Das Kassettengehäuse liegt mit seinem Seitenteil somit auf der Auflageschulter der Befestigungsmittel 5b im Bereich der Seitenwandung auf. Gleichzeitig liegt auch das Hakenteil 6b auf der Auflageschulter fluchtend auf. Ein Stirnende des Hakenteils 6b ist mit einem Anschlagkopf versehen, der in eine Aussparung der Aufnahmetasche der Befestigungsmittel 5b in der Seitenwandung eintaucht. Die Aussparung ist in Fig. 9 erkennbar, jedoch nicht näher bezeichnet. Das Hakenteil 6b ist durch eine Riegeleinrichtung 8b, 11b, 12b formschlüssig in der in die Aufnahmetasche und die Aussparung eingetauchten Position gesichert. Der Anschlagkopf verhindert, dass das Kassettengehäuse 3b axial zur Fahrzeugmitte hin aus der Aufnahmetasche herausgleiten kann. Hierzu schlägt der Anschlagkopf an einem innenliegenden Rand der Aussparung an. Die Riegeleinrichtung ist analog der Riegeleinrichtung nach Fig. 7 um eine Schwenkachse S₂ schwenkbeweglich gelagert. Funktionsgleiche Teile wie bei der Ausführungsform nach den Fig. 6 und 7 sind mit gleichen Bezugszeichen unter Hinzufügung des Buchstabens b versehen.

Durch einfache Verdrehung des Hakenteiles 6b um die Drehachse S₃ kann jedes Hakenteil 6b wahlweise für die Arretierung des Kassettengehäuses 3b an der wenigstens einen Sitzlehne 2b oder an den Auflageschultern der Seitenwandungen eingesetzt werden.

## Patentansprüche

1. Halterung *für* eine Funktionseinrichtung in einem Fahrzeuginnenraum, mit fahrzeuginnenraumseitig vorgesehenen Befestigungsmitteln, sowie mit der Funktionseinrichtung zugeordneten Haltemitteln, die mit den fahrzeuginnenraumseitig vorgesehenen Befestigungsmitteln lösbar in Wirkverbindung bringbar sind, **dadurch gekennzeichnet, dass** die Haltemittel (6, 6a, 6b) in ihrer Positionierung und in ihrer Gestaltung derart ausgeführt sind, dass die Haltemittel (6, 6a, 6b) alternativ zu der Verbindung mit den Befestigungsmitteln (5, 5a, 5b) an Sicherungsmittein (7, 7a, 7b) festlegbar sind, die an wenigstens einer beweglichen Sitzlehne (2, 2a, 2b) zur fahrzeugseitigen lösbaren Fixierung der Sitzlehne in einer aufrechten Lehnposition vorgesehen sind.

2. Halterung nach Anspruch 1, **dadurch gekennzeichnet, dass** die Befestigungsmittel (5, 5a, 5b) im Bereich von Begrenzungsflächen, insbesondere von Seitenwandungen, des Fahrzeuginnenraumes (1) angeordnet sind, und dass die Befestigungsmittel (5, 5a, 5b) und die Sicherungsmittel (7, 7a, 7b) jeweils einen formschlüssig wirksamen Sperrmechanismus aufweisen, um die Haltemittel (6, 6a, 6b) aufnehmen zu können.

3. Halterung nach Anspruch 1, **dadurch gekennzeichnet, dass** die Haltemittel (6a, 6b) zwischen zwei unterschiedlichen Fixierpositionen beweglich gelagert sind, wobei die beiden Fixierpositionen auf die Lage der Funktionseinrichtung (3a, 3b) relativ zu den Sicherungsmitteln (7a, 7b) einerseits und relativ zu den Befestigungsmitteln (5a, 5b) andererseits abgestimmt sind.

4. Halterung nach Anspruch 3, **dadurch gekennzeichnet, dass** die Haltemittel (6a, 6b) schwenkbeweglich in wenigstens einem Gehäuseteil der Funktionseinrichtung (3a, 3b) gelagert sind.

5. Halterung nach Anspruch 1, **dadurch gekennzeichnet, dass** die Haltemittel (6, 6a, 6b) mit wenigstens einem durch Formschluss sicherbaren Verankerungselement zur alternativen Verbindung mit den Sicherungsmitteln oder den Befestigungsmitteln versehen sind.

6. Halterung nach Anspruch 5, **dadurch gekennzeichnet, dass** die Sicherungsmittel (7 bis 7b) und die Befestigungsmittel (5 bis 5b) zu dem wenigstens einen Verankerungselement der Haltemittel (6 bis 6b) korrespondierende Riegelelemente (18; 11 bis 11 b) aufweisen.

7. Halterung nach Anspruch 6, **dadurch gekennzeichnet, dass** als Verankerungselement ein Bügel- oder Hakenteil (6 bis 6b) vorgesehen ist, das mit einem korrespondierenden Riegelelement zusammenwirkt.

8. Halterung nach Anspruch 7, **dadurch gekennzeichnet, dass** das Bügelteil oder das Riegelelement durch einen Betätigungsmechanismus insbesondere manuell lösbar gestaltet sind.

## Claims

1. Mounting for a functional unit in a vehicle interior, having fixing means provided in the vehicle interior and having retaining means associated with the functional unit, which retaining means are arranged to be brought releasably into engagement with the fixing means provided in the vehicle interior, **characterised in that** the retaining means (6, 6a, 6b) are configured in their positioning and in their design such that, as an alternative to being connected to the fixing means (5, 5a, 5b), the retaining means(6, 6a, 6b) are fixable to securing means (7, 7a, 7b), which are provided on at least one movable seat back (2, 2a, 2b) for releasable fixing in the vehicle of the seat back in an upright seat back position.

2. A mounting according to claim 1, **characterised in that** the fixing means (5, 5a, 5b) are arranged in the region of bounding surfaces, especially lateral walls, of the vehicle interior (1), and **in that** the fixing means (5, 5a, 5b) and the securing means (7, 7a, 7b) each have a positive-locking locking mechanism in order to be able to receive the retaining means (6, 6a, 6b).

3. A mounting according to claim 1, **characterised in that** the retaining means (6a, 6b) are mounted so as to move between two different fixing positions, the two fixing positions being matched to the position of the functional unit (3a, 3b) relative to the securing means (7a, 7b) on the one hand and relative to the fixing means (5a, 5b) on the other hand.

4. A mounting according to claim 3, **characterised in that** the retaining means (6a, 6b) are pivotally mounted in at least one housing portion of the functional unit (3a, 3b).

5. A mounting according to claim 1, **characterised in that** the retaining means (6, 6a, 6b) are provided with at least one anchoring element securable by positive locking for alternative connection to the securing means or to the fixing means.

6. A mounting according to claim 5, **characterised in that** the securing means (7 to 7b) and the fixing means (5 to 5b) comprise locking bolt elements (18; 11 to 11 b) corresponding to the at least one anchoring element of the retaining means (6 to 6b).

7. A mounting according to claim 6, **characterised in that** a stirrup-shaped element or hook element (6 to 6b) is provided as an anchoring element, which cooperates with a corresponding locking bolt element.

8. A mounting according to claim 7, **characterised in that** the stirrup-shaped element or the locking bolt element are configured in particular to be manually releasable by an operating mechanism.

## Revendications

1. Support pour un dispositif fonctionnel dans un habitacle de véhicule, comprenant des moyens de fixation prévus du côté de l'habitacle du véhicule, ainsi que des moyens de maintien associés au dispositif fonctionnel qui peuvent être amenés en liaison active de manière amovible avec les moyens de fixation prévus du côté de l'habitacle du véhicule, **caractérisé en ce que** les moyens de maintien (6, 6a, 6b) sont configurés, en termes de positionnement et de forme, de telle sorte que les moyens de maintien (6, 6a, 6b) peuvent être fixés, en variante à la liaison avec les moyens de fixation (5, 5a, 5b), à des moyens de sécurité (7, 7a, 7b) qui sont prévus au niveau d'au moins un dossier de siège mobile (2, 2a, 2b), pour la fixation amovible, du coté du véhicule, du dossier du siège, dans une position de dossier droite.

2. Support selon la revendication 1, **caractérisé en ce que** les moyens de fixation (5, 5a, 5b) sont disposés dans la zone de surfaces de limitation, en particulier de parois latérales, de l'habitacle du véhicule (1) et les moyens de fixation (5, 5a, 5b) et les moyens de sécurité (7, 7a, 7b) présentent respectivement un mécanisme de, blocage agissant par complémentarité de formes pour la réception des moyens de maintien (6, 6a, 6b).

3. Support selon la revendication 1, **caractérisé en ce que** les moyens de maintien (6a, 6b) sont logés de façon mobile entre deux positions de fixation différentes, les deux positions de fixation étant réglées sur la position du dispositif fonctionnel (3a, 3b) par rapport aux moyens de sécurité (7a, 7b) d'une part et par rapport aux moyens de fixation (5a, 5b) d'autre part.

4. Support selon la revendication 3, **caractérisé en ce que** les moyens de maintien (6a, 6b) sont logés de façon pivotante dans au moins une partie de boîtier du dispositif fonctionnel (3a, 3b).

5. Support selon la revendication 1, **caractérisé en ce que** les moyens de maintien (6, 6a, 6b) sont pourvus d'au moins un élément d'ancrage pouvant être fixé par complémentarité de formes pour la liaison alternative avec les moyens de sécurité ou les moyens de fixation.

6. Support selon la revendication 5, **caractérisé en ce que** les moyens de sécurité (7 à 7b) et les moyens de fixation (5 à 5b) présentent des éléments de verrouillage (18 ; 11 à 11b) qui correspondent à au moins un élément d'ancrage des moyens de maintien (6 à 6b).

7. Support selon la revendication 6, **caractérisé en ce qu'**il est prévu en tant qu'élément d'ancrage une partie en forme d'étrier ou de crochet (6 à 6b) qui coopère avec un élément de verrouillage correspondant.

8. Support selon la revendication 7, **caractérisé en ce que** la partie en forme d'étrier ou l'élément de verrouillage sont en particulier formés de façon amovible manuellement par un mécanisme d'actionnement.
